# EUROPÄISCHE PATENTSCHRIFT

(11) **EP 1 373 831 B1**
(45) Veröffentlichungstag und Bekanntmachung des Hinweises auf die Patenterteilung: **11.12.2013**
(21) Anmeldenummer: 02717947.2
(22) Anmeldetag: 13.02.2002
(51) Int. Cl.: G01C 19/56

(54) **DREHRATENSENSOR**
ANGULAR RATE SENSOR
DETECTEUR DE VITESSE DE ROTATION

(30) Priorität: 21.02.2001 DE 10108196
(43) Veröffentlichungstag der Anmeldung: 02.01.2004
(73) Patentinhaber: ROBERT BOSCH GMBH, 70442 Stuttgart (DE)
(72) Erfinder: WILLIG, Rainer, 71732 Tamm (DE); THOMAE, Andreas, 29625 Anderson (DE); KUHLMANN, Burhard, 72800 Ehingen u.A. (DE); HAUER, Joerg, 72762 Reutlingen (DE); GOMEZ, Udo-Martin, 71229 Leonberg (DE); GOETZ, Siegbert, 70839 Gerlingen (DE); DOERING, Christian, 70563 Stuttgart (DE); FEHRENBACH, Michael, 72766 Reutlingen (Mittelstadt) (DE); BAUER, Wolfram, 72074 Tuebingen (DE); BISCHOF, Udo, 72827 Wannweil (DE); NEUL, Reinhard, 70567 Stuttgart (DE); FUNK, Karsten, Palo Alto, CA 9430 (US); LUTZ, Markus, 94304 Palo Alto (US); WUCHER, Gerhard, 72762 Reutlingen (DE); FRANZ, Jochen, 72762 Reutlingen (DE)
(86) Internationale Anmeldenummer: PCT/DE2002/000499
(87) Internationale Veröffentlichungsnummer: WO 2002/066928

(56) Entgegenhaltungen:
- EP-A- 0 911 606
- DE-A1- 19 928 759
- US-A- 5 396 797
- US-A- 5 604 312
- US-A- 5 635 638

## Beschreibung

### Stand der Technik

Die Erfindung geht aus von einem Drehratensensor nach der Gattung des unabhängigen Patentanspruchs.

Aus der US 5728936 sind bereits Drehratensensoren bekannt, die denen auf der Oberfläche eines Substrats ein erstes und ein zweites Coriolis-Element angeordnet sind. Die Coriolis-Elemente werden zu Schwingungen in einer ersten Achse angeregt. Die Auslenkungen der Coriolis-Elemente aufgrund einer Coriolis-Kraft in einer zweiten Achse, die ebenfalls parallel zum Substrat ist, werden nachgewiesen.

Die Offenlegungsschrift DE 199 28 759 A1 offenbart einen Winkelgeschwindigkeitssensor mit Kopplungsbalken, die schwimmend gestützt sind, um relativ zu einem Substrat beweglich zu sein, durch Federbalken, die in Richtungen einer X-Achse und einer Y-Achse sehr flexibel sind und symmetrisch sind bezüglich einer Mitte des Sensors ; einem ersten Vibrator und einem zweiten Vibrator, die jeweils gestützt sind durch die Kopplungsbalken über Federbalken, die in der X-Richtung sehr flexibel sind.

### Vorteile der Erfindung

Der erfindungsgemäße Drehratensensor mit den Merkmalen des unabhängigen Patentanspruchs hat demgegenüber den Vorteil, dass eine klare Frequenztrennung der unterschiedlichen Schwingungsmoden erreicht wird. Durch die Wahl einer entsprechenden Anregungsfrequenz kann so gezielt die gegenphasige Schwingung angeregt werden.

Weitere Vorteile und Verbesserungen ergeben sich durch die Maßnahmen der abhängigen Patentansprüche. Wenn sich die Schwerpunkte der Coriolis-Elemente senkrecht zu einer Verbindungsgeraden zwischen den Schwerpunkten bewegen, so liegen die Auslenkungen der Coriolis-Elemente aufgrund der Coriolis-Kraft im zeitlichen Mittel auf ein und derselben Achse, in der eine Drehbeschleunigung keinerlei Kraftkomponente ausübt. Eine weitere Form der Anregung erfolgt durch eine Schwingung beider Corioliselemente auf einer Achse. Die Anregung der Schwingungen der Coriolis-Elemente erfolgt besonders einfach durch ein Antriebselement, welches Antriebskräfte durch Federn überträgt. Das Coriolis-Element kann dabei vollständig an diesem Antriebselement aufgehängt werden. Als Anregungsmittel können dabei elektrostatische Kammantriebe an den Antriebselementen vorgesehen werden. Ein Nachweis der Coriolis-Kraft kann dadurch erfolgen, dass das Coriolis-Element bewegliche Elektroden aufweist, die gegenüber feststehenden Elektroden angeordnet sind. Es können aber auch Nachweiselemente vorgesehen werden, auf die die Coriolis-Kräfte mittels Federn übertragen werden. Dabei ist es insbesondere möglich, die Nachweiselemente so an dem Substrat aufzuhängen, dass nur eine Bewegung in Richtung der Coriolis-Kräfte erfolgt. Störeffekte aufgrund einer Bewegung der beweglichen Elektroden, die nicht in der Nachweisrichtung sind, werden dadurch unterdrückt.

### Zeichnungen

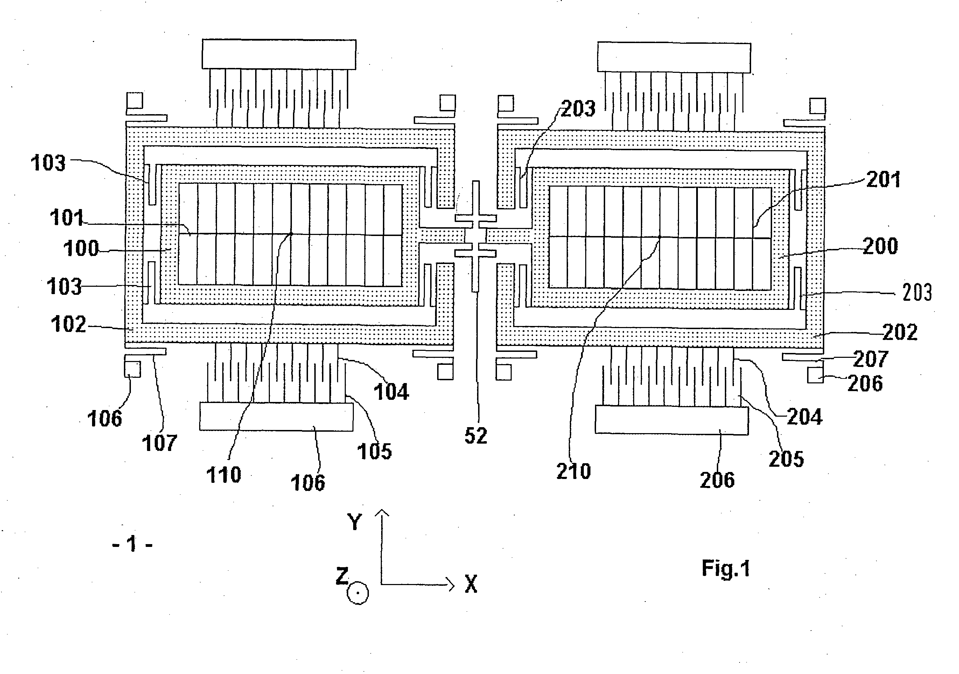

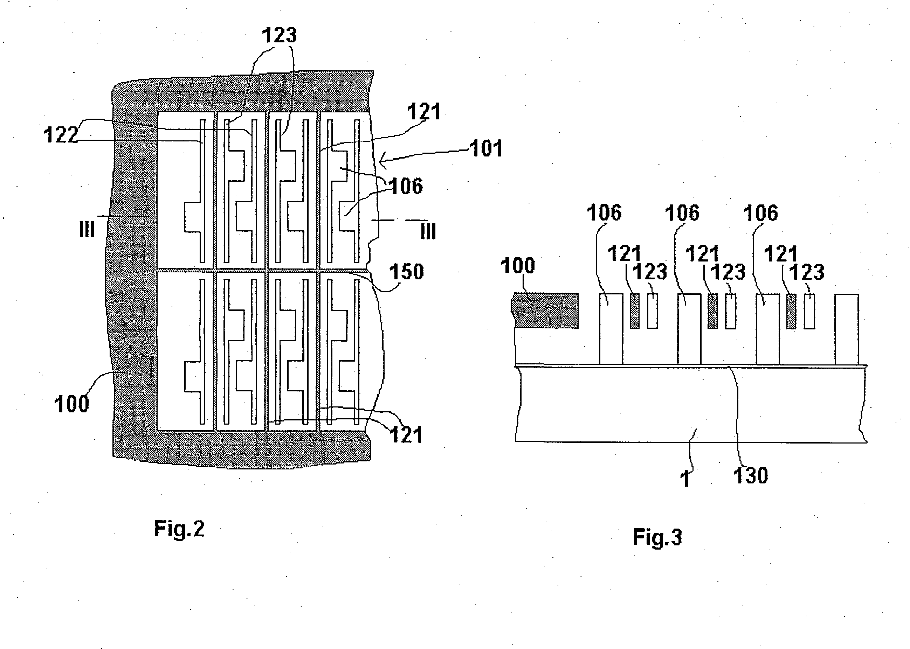

Ausführungsbeispiele der Erfindung werden in den Zeichnungen dargestellt und' in der nachfolgenden Beschreibung näher erläutert. Es zeigen Figur 1 eine Aufsicht auf einen ersten erfindungsgemäßen Drehratensensor, Figur 2 eine Detailansicht des Drehratensensors nach Figur 1, Figur 3 einen Querschnitt durch die Figur 2 und die Figuren 4 und 5 weitere Ausführungsbeispiele von Drehratensensoren in einer Aufsicht.

### Beschreibung

In den Figuren 1-3 wird ein erstes Ausführungsbeispiel der Erfindung erläutert. In Figur 1 wird dabei eine Aufsicht auf den gesamten Drehratensensor, in der Figur 2 eine Detailansicht eines Teils des Drehratensensors und in der Figur 3 wird eine Seitenansicht eines Querschnitts durch die Figur 2 gezeigt.

In Figur 1 wird eine Aufsicht auf eine in der Figur 1 nicht näher dargestelltes Substrat 1 gezeigt, in dem ein erstes Coriolis-Element 100 und ein zweites Coriolis-Element 200 angeordnet sind. Das erste und das zweite Coriolis-Element 100, 200 sind als rechteckige, rahmenförmige Strukturen ausgebildet. Die rahmenförmigen Coriolis-Elemente 100 und 200 umgeben Detektionsmittel 101, 201, die in der Figur 1 vereinfacht als Gitterlinien dargestellt sind. Die Detektionsmittel werden in der Detailansicht der Figur 2 dargestellt und weiter unten näher erläutert. Die rahmenförmigen Coriolis-Elemente 100, 200 sind von weitgehend rechteckigen, rahmenförmigen Antriebselementen 102, 202 umgeben, die jeweils auf den einander zugewandten Seiten durchbrochen sind. Durch diese Durchbrüche sind die Corioliselemente 100, 200 mittels einer Koppelfeder 52 miteinander verbunden. Die Koppelfeder ist dabei so ausgelegt, dasss sie sowohl in X-Richtung wie auch in Y-Richtung weich ausgebildet ist. Die Verbindung zwischen den Antriebselementen 102, 202 und den Coriolis-Elementen wird durch Biegefedern 103, 203 hergestellt. Die Biegefedern sind dabei so ausgebildet, dass sie in X-Richtung weich ausgebildet sind und in Y-Richtung steif ausgebildet sind. An den Antriebselementen 102, 202 sind bewegliche Elektroden 104, 204 befestigt, die kammartig in feststehende Elektroden 105, 205 greifen. Die feststehenden Elektroden 105, 205 sind durch Lagerblöcke 106, 206 fest mit dem Substrat 1 verbunden. Weiterhin sind die Antriebselemente 102, 202 mittels Federn 107, 207 mit weiteren Lagerblökken 106, 206 verbunden, die ebenfalls fest mit dem Substrat 1 verbunden sind.

Der Drehratensensor ist somit nur über die Lagerblöcke 106, 206 mit dem Substrat 1 verbunden. Sowohl die Coriolis-Elemente 100, 200 wie auch die Antriebselemente 102, 202 können somit der relativ zum Substrat 1 beliebig bewegt werden. Die Bewegung dieser Elemente wird nur durch die Federelemente 103, 203 und 107, 207 bestimmt.

Die Federn 107, 207 sind so ausgelegt, dass sie in Y-Richtung weich und in X-Richtung steif ausgebildet sind. Die Antriebselemente 102, 202 können sich somit im Wesentlichen nur entlang von Bahnen bewegen, die parallel zur Y-Richtung sind. Die Coriolis-Elemente 100, 200 sind über die Federn 103, 203 mit den Antriebselementen 102, 202 verbunden. Die Coriolis-Elemente 100, 200 können sich somit relativ zu den Antriebselementen 102, 202 im Wesentlichen nur in X-Richtung bewegen. Bei einer Bewegung der Antriebselemente 102, 202 in einer Richtung, die parallel zur Y-Richtung ist, werden natürlich auch die Coriolis-Elemente 100, 200 in diesen Richtungen bewegt. Relativ zum Substrat 1 sind somit die Coriolis-Elemente 100, 200 sowohl in einer Richtung parallel zur Y-Richtung wie auch in X-Richtung beweglich.

Für die Beschreibung der Funktion des Sensors ist noch von jedem der Coriolis-Elemente 100, 200 ein Schwerpunkt 110, 210 angegeben. Die Schwerpunkte liegen jeweils im Mittelpunkt der rahmenförmigen Coriolis-Elemente 100, 200.

Durch Anlegen von elektrischen Spannungen zwischen den beweglichen Elektroden 104, 204 und den feststehenden Elektroden 105, 205 werden die Antriebselemente 102, 202 zu Schwingungen angeregt. Entsprechend werden auch die Coriolis-Elemente 100, 200 zu Schwingungen angeregt. Der Schwerpunkt 110, 210 der Coriolis-Elemente 100, 200 bewegt sich dann jeweils auf einer Achse, die parallel zur Y-Achse ist. Die Bewegungen der beiden Coriolis-Elemente 100, 200 erfolgen somit in Achsen, die parallel zueinander ausgebildet sind. Die Schwerpunkte bewegen sich dabei ohne die Einwirkung einer Corioliskraft (d.h. ohne eine Drehbewegung des Substrats um eine Achse die senkrecht auf dem Substrat 1 steht) auf Geraden die zueinander parallel sind. Wenn es dabei zu einer Drehung des Substrats 1 um die Z-Achse kommt, d.h. um die Achse, die senkrecht auf dem Substrat 1 steht, so wirken auf jedes der Coriolis-Elemente 100, 200 Coriolis-Kräfte, die senkrecht zu der Drehachse und senkrecht zu der Bewegungsachse sind. Diese Kräfte wirken dann in X-Richtung.

Die beweglichen Elektroden 104, 204, zusammen mit den feststehenden Elektroden 105, 205 und den Antriebselementen 102, 202 bilden somit Anregungsmittel, durch die die Coriolis-Elemente 100, 200 zu Schwingungen angeregt werden, bei denen die Schwingungsachsen der Schwerpunkte 110, 210 zueinander parallel ausgerichtet sind. Diese Achsen sind dabei in einem gewissen Abstand zueinander angeordnet, der mindestens die laterale Ausdehnung eines der Coriolis-Elemente 100, 200 in der X-Richtung beträgt.

Die beiden Corioliselemente 100, 200 sind mittels einer Koppelfeder 52 verbunden, die sowohl in X-Richtung wie auch in Y-Richtung weich ausgebildet ist. Durch diese Koppelfeder wird eine frequenzmäßige Trennung von Schwingungsmoden der Corioliselemente 100, 200 in X- und Y-Richtung erreicht. Für eine gleichphasige Schwingung in Y-Richtung sind nämlich die Federsteifigkeiten der Federn 107, 207 zu berücksichtigen. Für eine gegenphasige Schwingung in Y-Richtung ist neben den Federsteifigkeiten der Federn 107, 207 auch noch die Federsteifigkeit der Koppelfeder 52 in Y-Richtung zu berücksichtigen. Für eine gleichphasige Schwingung in X-Richtung sind nämlich die Federsteifigkeiten der Federn 103, 203 zu berücksichtigen. Für eine gegenphasige Schwingung in X-Richtung ist neben den Federsteifigkeiten der Federn 103, 203 auch noch die Federsteifigkeit der Koppelfeder 52 in X-Richtung zu berücksichtigen. Die Eigenfrequenzen der gleichphasigen Schwingungen in X- und Y-Richtung unterscheiden sich somit von der Frequenz der gegenphasigen Schwingungen, was eine gezielte Anregung der unterschiedlichen Schwingungsmoden erleichtert. Gewünscht ist hier insbesondere eine Anregung der Gegenphase-Schwingungsmoden. Für die Y-Richtung bedeutet dies, dass wenn sich das linke Corioliselement 100 des Drehratensensors nach unten bewegt, sich das rechte Corioliselemenet 200 nach oben bewegen soll und umgekehrt. Für die X-Richtung bedeutet dies, dass wenn sich das linke Corioliselement 100 des Drehratensensors nach links bewegt, sich das rechte Corioliselemenet 200 nach rechts bewegen soll und umgekehrt. Durch die Auswahl einer entsprechenden Anregungsfrequenz die als elektrische Wechselspannung an die Elektroden 105, 205, 104, 204 angelegt wird lassen sich so gezielt die gegenphasigen Schwingungsmoden anregen.

Die Koppelfeder 52 ist hier als einfache Kleeblattfeder ausgebildet. Dies ist aber nur eine Möglichkeit. Generell sind alle Elemente geeignet die sowohl in der x-Richtung wie auch in der Y-Richtung weich ausgebildet sind. Unter "weich" wird hier eine Federsteifigkeit verstanden, die bei den üblicherweise auftretenden Kräften eine Auslenkung der Corioliselemente relativ zum Substrat erlaubt. Was weich ist muß im Einzelfall anhand der Massen der Corioliselemente 100, 200 und der auftretenden Kräfte ermittelt werden. Die Koppelfeder ist dabei so auszulegen, dass eine genügend starke frequenzmäßige Auftrennung der parallelen und antiparallelen Schwingungsmoden sowohl in X-Richtung als auch in Y-Richtung erfolgt und gleichzeitig möglichst geringe mechanische Verzerrungen erzeugt werden. Desweiteren ist die Koppelfeder so auszulegen, dass mechanische Nichtlinearitäten minimiert werden und desweiteren eine stressentkoppelte Verbindungen zwischen den Corioliselementen entsteht.

Vorteilhaft ist weiterhin, dass bezogen auf die Ruhelage der Coriolis-Elemente 100, 200 die Bewegung in X-Richtung auf einer gemeinsamen Achse erfolgt. Der Vorteil dieses Prinzips ist, dass eine Drehbeschleunigung um die Z-Achse herum keinen unmittelbaren Einfluß auf die Bewegung der Coriolis-Elemente 100, 200 ausüben kann, da diese von einer Drehbeschleunigung um die Z-Achse herum nicht ausgelenkt werden. Der Drehratensensor ist daher besonders unempfindlich gegenüber Drehbeschleunigungen um die Z-Achse.

In der Figur 2 wird eine vergrößerte Detailansicht der Auswertemittel 101 des Coriolis-Elements 100 der Figur 1 gezeigt. Das rahmenförmige Coriolis-Element 100 umgibt die Auswertemittel 101. Diese sind als gitterförmige Elektroden 121 ausgebildet, wobei eine Vielzahl von gitterförmigen Elektroden 121 innerhalb der rahmenförmigen Struktur des Coriolis-Elements 100 vorgesehen ist. Zur Stabilisierung sind diese gitterförmigen Elektroden 121 noch mit einem Mittelbalken 130 miteinander verbunden. Jede der Elektroden 121 bewegt sich zusammen mit dem Coriolis-Element 100. Die Elektroden 121 sind zwischen feststehenden Elektroden 122, 123 angeordnet, die durch Lager 106 auf dem Substrat 1 befestigt sind. Die Elektroden 112, 123 sind somit als feststehende Elektroden ausgebildet, die sich relativ zum Substrat nicht bewegen.

In der Figur 3 wird ein Querschnitt entlang der Linie III-III der Figur 2 gezeigt. Figur 3 zeigt im Querschnitt das Substrat 1 und eine auf der Oberfläche des Substrats angeordnete Leiterbahn 130. Auf dieser Leiterbahn 130 sind die Verankerungen 106 befestigt und somit fest mit dem Substrat' 1 verbunden. Die Lager 106 und auch die daran befestigten Elektroden sind elektrisch leitend und werden durch die Leiterbahn 130 parallel geschaltet. Jede der beweglichen Elektroden 121 ist zwischen einer feststehenden Elektrode 122 und einer feststehenden Elektrode 123 angeordnet. Es werden so zwei Kondensatoren gebildet, zum einen zwischen der beweglichen Elektrode 121 und den Elektroden 122 und zum anderen zwischen der beweglichen Elektrode 121 und der feststehenden Elektroden 123. Diese beiden Kapazitäten sind als Differentialkapazitäten ausgebildet, d.h. bei einer Zunahme der einen Kapazität verringert sich die andere Kapazität entsprechend. Durch die seitliche Versetzung der Lagerblöcke 106 der beiden Elektrodengruppen 122, 123 lassen sich durch entsprechende Leiterbahnen 130 jeweils die entsprechenden Kapazitäten miteinander parallel schalten.

In der Figur 3 ist im Querschnitt sehr gut zu erkennen, dass das Coriolis-Element 100 über dem Substrat 1 angeordnet ist und dass auch die mit dem Coriolis-Element 100 verbundenen Elektroden 121 über dem Substrat 1 angeordnet sind. Im Querschnitt wird der Schnitt durch die Lagerblöcke 106 der Elektroden 122 gezeigt, die durch die Lagerblöcke 106 auf der Leiterbahn 130 angeordnet sind und so fest mit dem Substrat 1 verbunden sind. Die Elektroden 123 werden im Querschnitt der Figur 3 ebenfalls über dem Substrat gezeigt. Sie sind jedoch an einer anderen Stelle mit dem Substrat 1 über eine entsprechende Leiterbahn 130 für diese Elektroden fest mit dem Substrat 1 verbunden.

Für das Substrat 1 und die über dem Substrat angeordneten Elemente wie Corioliselemente 100, 200, Antriebselemente 102, 202, die Federn und Elektroden wird als Matrial vorzugsweise Silizium verwendet, welches durch entsprechende Dotierungen leitend ausgebildet ist. Das Substrat kann durch isolierende Schichten dort wo es erfolderlich ist, elektrisch isoliert werden. Es können aber auch andere Materialien wie Keramik, Glas oder Metalle für die Senoren verwendet werden.

Wesentlich an den Drehratensensoren nach Figur 1 ist, dass aufgrund der Koppelfeder 52, die in X- und Y-Richtung weich ausgestaltet ist, eine frequenzmäßige Trennung der gegenphasigen und gleichphasigen Schwingung in beide Schwingungsrichtungen (X und Y) erfolgt. Durch gezielte Einspeisung entsprechender Frequenzen können somit die gewünschten gegenphasigen Schwingungen erzeugt werden.

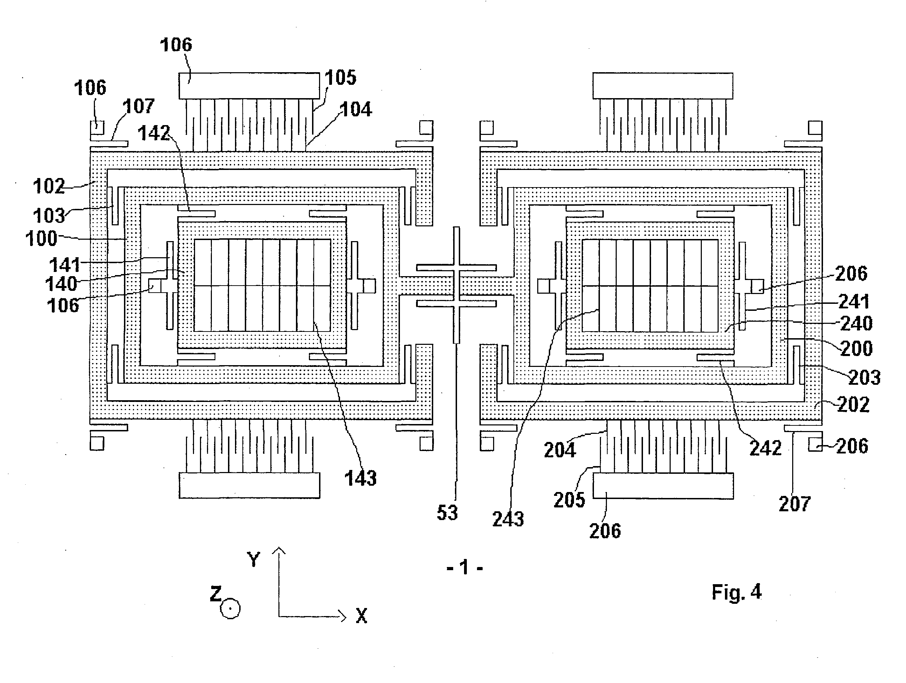

In der Figur 4 wird die Aufsicht auf ein weiteres Ausführungsbeispiel eines-erfindungsgemäßen Drehratensensors gezeigt. In der Figur 4 wird eine Aufsicht auf ein Substrat 1 gezeigt, auf dem wie in der Figur 1 Coriolis-Elemente 100, 200 angeordnet sind, die von Antriebselementen 102, 202 umgeben sind, die auf den jeweils zugewandten Seiten durchbrochen sind. Coriolis-Elemente 100, 200 und Antriebselemente 102, 202 sind wieder mit Federn 103, 203 verbunden. Die Antriebselemente 102, 202 sind mittels Federn 107, 207 mit Lagerblöcken 106, 206 verbunden. Weiterhin sind bewegliche Elektroden 104, 204, feststehende Elektroden 105, 205 und Lagerblöcke 106 für die feststehenden Elektroden 105, 205 vorgesehen. Die beiden Corioliselemente 100, 200 sind mittels einer Koppelfeder 53 verbunden. Alle diese Elemente entsprechen den Elementen wie sie bereits in Figur 1 beschrieben wurden und üben die gleiche Funktion aus.

Im Unterschied zu Figur 1 sind jedoch für den Nachweis der Auslerikung der Coriolis-Elemente 100, 200 jeweils ein rahmenförmiges Nachweiselement 140, 240 im Inneren der rahmenförmigen Coriolis-Elemente 100, 200 vorgesehen. Die Nachweiselemente 140, 240 sind ebenfalls als rechteckige Rahmenstrukturen ausgeführt, die mittels Federelementen 141, 241 mit Lagerblöcken 106, 206 mit dem Substrat 1 verbunden sind. Die Federelemente 141, 241 sind weich in X-Richtung und steif in Y-Richtung und erlauben somit im wesentlichen nur, dass die Nachweisrahmen 140, 240 in X-Richtung auslenkbar sind. Die Nachweisrahmen 140, 240 sind durch Federelemente 142, 242 mit den entsprechenden Coriolis-Elementen 100, 200 verbunden. Die Federelemente 142, 242 sind in Y-Richtung weich und in X-Richtung steif ausgelegt und übertragen somit besonders gut die Coriolis-Kräfte in X-Richtung. Im Inneren der Nachweisrahmen 140, 240 sind wieder gitterförmige Nachweiselektroden 143, 243 angeordnet, die in der Figur 4 nur angedeutet werden. Eine Detailansicht dieser Elemente entspricht wieder den Figuren 2 und 3.

Der Vorteil dieser Anordnung ist darin zu sehen, dass die gitterförmigen Elektroden 143, 243 im Wesentlichen nur in X-Richtung beweglich sind und somit keine Querbewegung relativ zu den feststehenden Elektroden erfolgt. In der Figur 1 bzw. in der Detailansicht nach Figur 2 sind die beweglichen Elektroden 121 unmittelbar mit dem Coriolis-Element 100 verbunden, so dass diese beweglichen Elektroden sowohl eine Bewegung in X-Richtung wie auch in Y-Richtung ausführen. Die Bewegung in X-Richtung ist notwendig für die Messung der Auslenkung des Coriolis-Elements 100 in X-Richtung. Die Bewegung in Y-Richtung ist jedoch für die Messung nicht erwünscht und kann eine mögliche Quelle von Fehlern sein. In der Figur 4 sind jedoch die Nachweisrahmen 140, 240 und ihre Verankerungen über die Federn 141, 241 an das Substrat 1 so ausgeführt, dass die beweglichen Elektroden 143, 243 nur eine Bewegung in X-Richtung ausführen. Es wird somit eine mögliche Ursache für Störungen des Mess-Signals beseitigt.

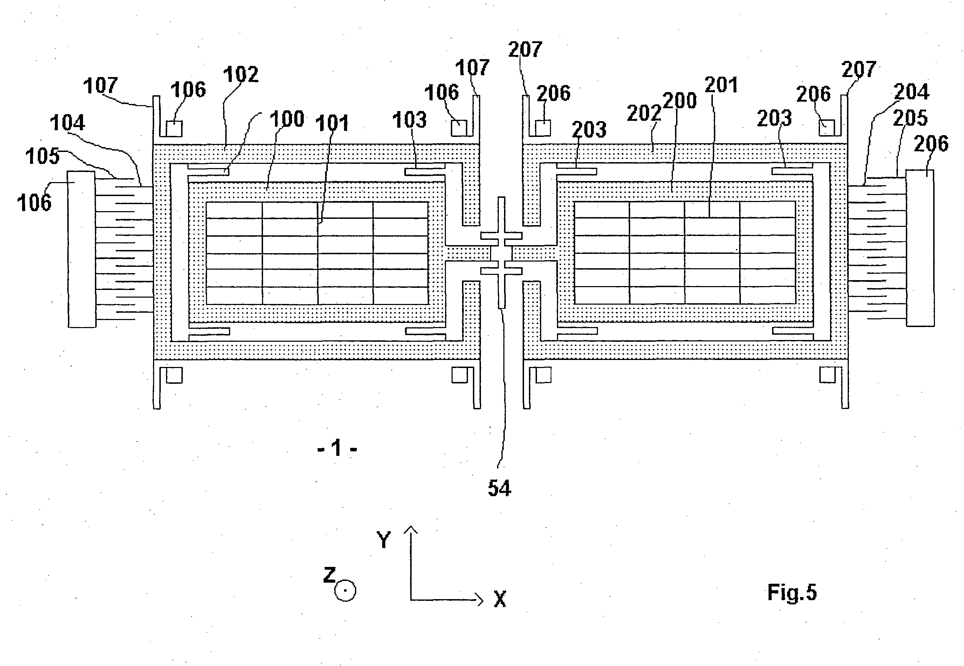

In der Figur 5 wird ein weiteres Ausführungsbeispiel gezeigt. Die Elemente 100, 200, 103, 203, 104, 204, 105, 205, 106, 206, 107, 207 entsprechen den aus der Figur 1 bekannten Elementen und dienen auch den gleichen Funktionen. Im Unterschied zu Figur 1 sind jedoch die Federn 103, 203, die die Corioliselemente 100, 200 mit den Antriebselementen 102, 202 verbinden, in Y-Richtung weich und in X-Richtung steif ausgebildet. Die Federn 107, 207 mit denen die Antriebselemente 102, 202 mit dem Substrat 1 verbunden sind , sind in X-Richtung weich und in Y-Richtung steif ausgebildet. Weiterhin sind die Elektroden 104, 105, 204, 205 mit Ihrer Längsrichtung parallel zur X-Richtung. Durch Anlegen von elektrischen Spannungen an den Elektroden 104, 105, 204, 205 können Kräfte in X-Richtung erzeugt werden, die eine Schwingung der Antriebselemente in der X-Richtung verursachen. Durch die Federn 103, 203 überträgt sich diese Schwingung auf die Corioliselemente 100, 200 die sich somit relativ zum Substrat bewegen. Bei einer Drehung des Substrats um die Z-Achse werden Corioliskräfte erzeugt, die eine Schwingung der Corioliselemente 100, 200 in der Y-Richtung zur Folge haben. Durch die Kopplungsfeder 54, die sowohl in X- wie auch in Y-Richtung weich ist, werden dabei die Schwingungen der Corioliselemente sowohl in der X-Richtung wie auch der Y-Richtung miteinander gekoppelt. Die Kopplung bewirkt wieder die zuvor bereits beschriebene Frequenztrennung der Schwingungsmoden. Die in der Figur 5 zeichnerisch nur angedeuteten Nachweiselemente 101 und 201 entsprechen der Beschreibung der Figuren 2 und 3, wobei jedoch die Nachweisrichtung jeweils parallel zur Y-Richtung ist.

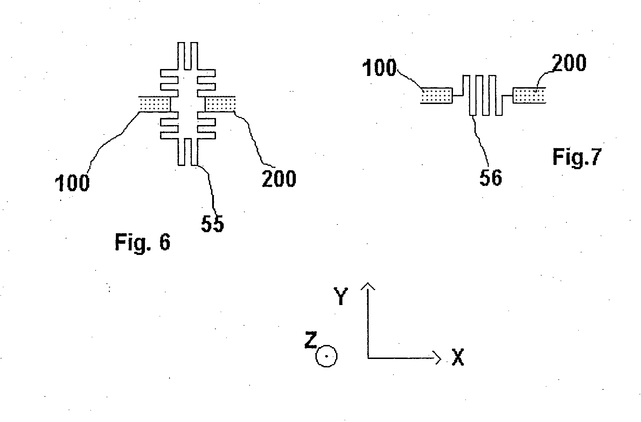

In der Figur 6 wird ein weiteres Ausführungsbeispiel für die erfindungsgemäße Koppelfeder gezeigt. Gezeigt wird nur die Koppelfer 55 die zwischen den in der Figur 6 nur angedeuteten Corioliselementen 100 und 200 angeordnet ist. Die Koppelfeder 55 ist sowohl in Y-Richtung wie auch in X-Richtung als doppelt gefaltene Feder ausgebildet, d.h. sie hat in beide Richtungen jeweils 2 Schleifen. Derartige Federn lassen sich bei geringem Platzbedarf besonders weich ausführen. Die Zahl der Schleifen kann dabei nach Bedarf weiter erhöht werden.

In der Figur 7 wird ein weiteres Ausführungsbeispiel für die erfindungsgemäße Koppelfeder gezeigt. Gezeigt wird nur die Koppelfer 56 die zwischen den in der Figur 7 nur angedeuteten Corioliselementen 100 und 200 angeordriet ist. Die Koppelfeder 56 ist als mehrfach gefaltene Feder in X-Richtung ausgeführt. Aufgrund der hohen Anzahl von Faltungen weist diese Feder auch eine weiche Federkonstante in Y-Richtung auf.

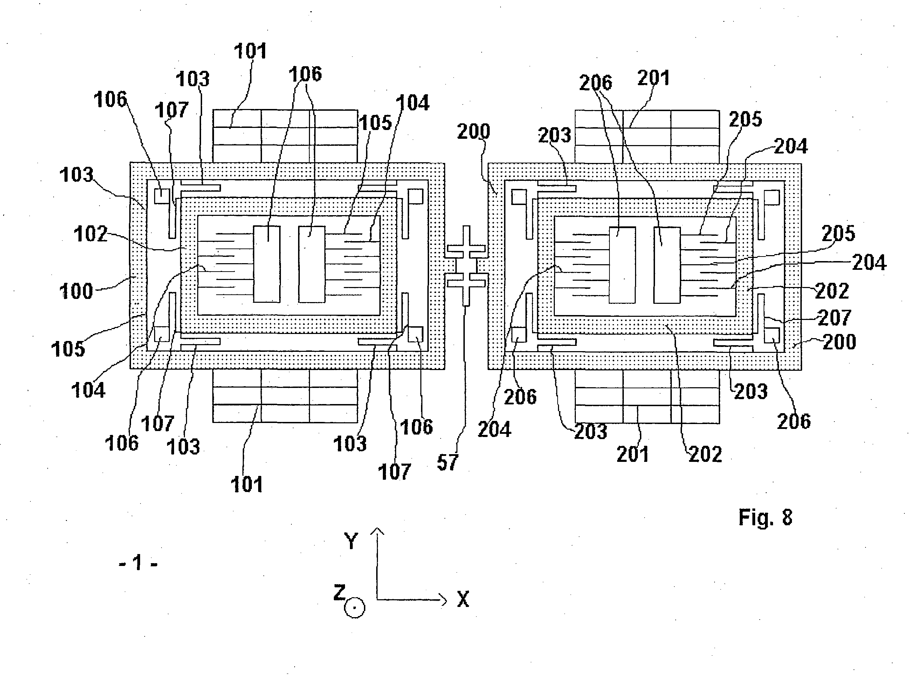

In der Figur 8 wird ein weiteres Ausführungsbeispiel gezeigt. Die Elemente 100, 200, 103, 203, 104, 204, 105, 205, 106, 206, 107, 207 entsprechen den aus der Figur 1 bekannten Elementen und dienen auch den gleichen Funktionen. Im Unterschied zur Figur 1 ist jedoch das Antriebselement 102, 202 als innerer Rahmen ausgebildet und das Corioliselement als äußerer Rahmen 100, 200. Am Antriebselement 102, 202 sind auf der inneren Seite der rahmenartigen Antriebsstruktur bewegliche Elektroden 104, 204 angeordnet die in feststehende Elektroden 105, 205 greifen die an Lagerblöcken 106, 206 befestigt sind. Die Elektroden 104, 105, 204, 205 sind so angeordnet, dass Kräfte parallel zur X-Richtung erzeugt werden können. Mit Federn 103, 203 die in X-Richtung steif und in Y-Richtung weich sind, sind die Antreibselemente 102, 202 mit den Corioliselementen 100, 200 verbunden. Die Antriebselemente 102, 202 sind mit Federn 107, 207, die in X-Richtung weich und in Y-Richtung steif sind, mit Lagerblökken 106, 206 und so mit dem Substrat 1 verbunden. Die Detektionsmittel 101, 201 sind auf der Außenseite der Corioliselemente 100, 200 angeordnet sind sind so beschaffen, dass eine Auslenkung in der Y-Richtung nachgewiesen wird. Sie entsprechen den Elemente wie sie bereits zur Figur 5 beschrieben wurden. Die beiden Corioliselemente 100 und 200 sind wieder mit einer Koppelfeder 57 verbunden, die in Y-Richtung und X-Richtung weich ausgebildet ist. Der Vorteil der äußeren Anordnung der Corioliselemente ist darin zu sehen, dass die Koppelfeder 57 besonders einfach zwischen den beiden Corioliselementen 100 und 200 angeordnet werden kann. Es ist keine Durchbruch in der rahmenartigen Struktur der Antreibselemenet 102, 202 erforderlich und die mechanische Stabilität des Drehratensensors wird verbessert. Die Funktion der in der Figur 8 gezeigten Struktur entspricht der Figur 5.

## Patentansprüche

1. Drehratensensor mit einem ersten Coriolis-Element (100) und einem zweiten Coriolis-Element (200), die nebeneinander über einer Oberfläche eines Substrats (1) angeordnet sind, wobei Anregungsmittel (104, 105, 204, 205) vorgesehen sind, durch die die Coriolis-Elemente (100, 200) zu Schwingungen parallel zu einer ersten Achse anregbar sind, wobei Detektionsmittel (101, 201) vorgesehen sind, durch die eine Auslenkung der Coriolis-Elemente (100, 200) aufgrund einer Coriolis-Kraft in einer zweiten Achse, die senkrecht zu der ersten Achse ist, nachweisbar sind, wobei die erste und zweite Achse (X, Y) parallel zur Oberfläche des Substrats (1) sind, **dadurch gekennzeichnet, dass** das erste und das zweite Coriolis-Elements (100, 200) mit einer Koppelfeder (52, 53, 54) nur miteinander verbunden sind, die in der ersten Achse und in der zweiten Achse weich ausgebildet ist.

2. Drehratensensor nach Anspruch 1, **dadurch gekennzeichnet, dass** die Coriolis-Elemente (100, 200) jeweils einen Schwerpunkt (110, 210) aufweisen und dass bei der Schwingung die Schwerpunkte (110, 210) ohne die Wirkung einer Corioliskraft eine Bewegung auf Geraden parallel zur Substratoberfläche ausführen, die senkrecht zu einer Geraden sind, die durch die beiden Schwerpunkte (110, 210) führt.

3. Drehratensensor nach Anspruch 1, **dadurch gekennzeichnet, dass** die Coriolis-Elemente (100, 200) jeweils einen Schwerpunkt (110, 210) aufweisen und dass bei der Schwingung die Schwerpunkte (110, 210) ohne die Wirkung einer Corioliskraft eine Bewegung auf einer Geraden ausführen, die durch die beiden Schwerpunkte (110, 210) führt.

4. Drehratensensor nach einem der vorhergehenden Ansprüche, **dadurch gekennzeichnet, dass** für das erste und zweite Coriolis-Element (100, 200) jeweils ein Antriebselement (102, 202) vorgesehen ist, welches mittels Federn mit dem jeweiligen Coriolis-Element (100, 200) verbunden ist, wobei die Federn (103, 203) in der ersten Achse steif und in der zweiten Achse weich ausgebildet sind.

5. Drehratensensor nach Anspruch 4, **dadurch gekennzeichnet, dass** die Antriebselemente mit Federn (107, 207) mit dem Substrat (1) verbunden sind, die in der ersten Achse weich und in der zweiten Achse steif ausgebildet sind und dass die Anregungsmittel (104, 204) mit den Antriebselementen (102, 202) verbunden sind.

6. Drehratensensor nach Anspruch 5, **dadurch gekennzeichnet, dass** die Anregungsmittel als elektrostatische Kammantriebe (104, 204, 105, 205) ausgebildet sind.

7. Drehratensensor nach einem der vorhergenden Ansprüche, **dadurch gekennzeichnet, dass** als Detektionsmittel bewegliche Elektroden (121) mit den Coriolis-Elementen (100, 200) verbunden sind, die gegenüber feststehenden Elektroden (122, 123) gegenüberliegend angeordnet sind, die mit dem Substrat (1) verbunden sind.

8. Drehratensensor nach einem der Ansprüche 1 bis 6, **dadurch gekennzeichnet, dass** für die Detektionsmittel erste und zweite Nachweiselemente (140, 240) vorgesehen sind, die mit Federn (142, 242) mit den CoriolisElementen (100, 200) verbunden sind, wobei die Federn in der ersten Achse weich und in der zweiten Achse steif ausgebildet sind.

9. Drehratensensor nach Anspruch 8, **dadurch gekennzeichnet, dass** die Nachweiselemente (140,240) bewegliche Elektroden (121) aufweisen, die feststehenden Elektroden (122, 123) gegenüberliegend angeordnet sind, die mit dem Substrat (1) verbunden sind.

10. Drehratensensor nach Anspruch 8 oder 9, **dadurch gekennzeichnet, dass** die Nachweiselemente (140, 240) mit Federn (140, 141, 241) mit dem Substrat (1) verbunden sind, die in der ersten Richtung steif und in der zweiten Richtung weich ausgebildet sind.

## Claims

1. Angular rate sensor having a first Coriolis element (100) and a second Coriolis element (200), which are arranged beside each other above a surface of a substrate (1), excitation means (104, 105, 204, 205) being provided by means of which the Coriolis elements (100, 200) can be excited to oscillate parallel to a first axis, detection means (101, 201) being provided by means of which it is possible to detect a deflection of the Coriolis elements (100, 200) on account of a Coriolis force in a second axis, which is perpendicular to the first axis, the first and the second axis (X, Y) being parallel to the surface of the substrate (1), **characterized in that** the first and the second Coriolis elements (100, 200) are connected to each other only by a coupling spring (52, 53, 54), which is designed to be weak in the first axis and in the second axis.

2. Angular rate sensor according to Claim 1, **characterized in that** the Coriolis elements (100, 200) each have a centre of gravity (110, 210), and **in that** during the oscillation, in the absence of the action of a Coriolis force, the centres of gravity (110, 210) execute a movement on straight lines parallel to the substrate surface which are perpendicular to a straight line which leads through the two centres of gravity (110, 210).

3. Angular rate sensor according to Claim 1, **characterized in that** the Coriolis elements (100, 200) each have a centre of gravity (110, 210) and **in that** during the oscillation, in the absence of the action of a Coriolis force, the centres of gravity (110, 210) execute a movement on a straight line which leads through the two centres of gravity (110, 210).

4. Angular rate sensor according to one of the preceding claims, **characterized in that**, for the first and second Coriolis element (100, 200), in each case a drive element (102, 202) is provided, which is connected to the respective Coriolis element (100, 200) by means of springs, the springs (103, 203) being designed to be stiff in the first axis and weak in the second axis.

5. Angular rate sensor according to Claim 4, **characterized in that** the drive elements are connected to the substrate (1) by springs (107, 207), which are designed to be weak in the first axis and stiff in the second axis, and **in that** the excitation means (104, 204) are connected to the drive elements (102, 202).

6. Angular rate sensor according to Claim 5, **characterized in that** the excitation means are formed as electrostatic comb drives (104, 204, 105, 205).

7. Angular rate sensor according to one of the preceding claims, **characterized in that** movable electrodes (121) are connected to the Coriolis elements (100, 200) as detection means and are arranged opposite stationary electrodes (122, 123) that are connected to the substrate (1).

8. Angular rate sensor according to one of Claims 1 to 6, **characterized in that**, for the detection means, first and second detection elements (140, 242) are provided, which are connected to the Coriolis elements (100, 200) by springs (142, 242), the springs being designed to be weak in the first axis and stiff in the second axis.

9. Angular rate sensor according to Claim 8, **characterized in that** the detection elements (140, 240) have movable electrodes (121), which are arranged opposite stationary electrodes (122, 123) that are connected to the substrate (1).

10. Angular rate sensor according to Claim 8 or 9, **characterized in that** the detection elements (140, 240) are connected to the substrate (1) by springs (140, 141, 241), which are designed to be stiff in the first direction and weak in the second direction.

## Revendications

1. Capteur de vitesse de rotation présentant un premier élément de Coriolis (100) et un deuxième élément de Coriolis (200) disposés l'un à côté de l'autre de la surface d'un substrat (1),
des moyens d'excitation (104, 105, 204, 205) étant prévus et permettant d'exciter les éléments de Coriolis (100, 200) à osciller parallèlement à un premier axe,
des moyens de détection (101, 201) étant prévus et permettant de détecter une déviation des éléments de Coriolis (100, 200) suite à l'application d'une force de Coriolis suivant un deuxième axe perpendiculaire au premier axe,
le premier et le deuxième axe (X, Y) étant parallèles à la surface du substrat (1),
**caractérisé en ce que**
le premier et le deuxième élément de Coriolis (100, 200) sont reliés l'un à l'autre uniquement par un ressort d'accouplement (52, 53, 54) déformable suivant le premier axe et le deuxième axe.

2. Capteur de vitesse de rotation selon la revendication 1, **caractérisé en ce que** les éléments Coriolis (100, 200) présentent chacun un centre de masse (110, 210) et **en ce que** lors de l'oscillation, les centres de masse (110, 210) exécutent sans l'effet d'une force de Coriolis un déplacement suivant des droites parallèles à la surface du substrat et perpendiculaires à une droite qui relie les deux centres de masse (110, 210).

3. Capteur de vitesse de rotation selon la revendication 1, **caractérisé en ce que** les éléments de Coriolis (100, 200) présentent chacun un centre de masse (110, 210) et **en ce que** lors de l'oscillation, les centres de masse (110, 210) exécutent sans l'effet d'une force de Coriolis un déplacement suivant des droites parallèles à la surface du substrat et perpendiculaires à une droite qui relie les deux centres de masse (110, 210).

4. Capteur de vitesse de rotation selon l'une des revendications précédentes, **caractérisé en ce que** des éléments d'entraînement (102, 202) respectifs reliés à chaque élément de Coriolis (100, 200) par des ressorts sont prévus pour le premier et pour le deuxième élément de Coriolis (100, 200), les ressorts (103, 203) étant rigides dans la direction du premier axe et déformables dans la direction du deuxième axe.

5. Capteur de vitesse de rotation selon la revendication 4, **caractérisé en ce que** les éléments d'entraînement sont reliés au substrat (1) par des ressorts (107, 207) déformables dans la direction du premier axe et rigides dans la direction du deuxième axe et **en ce que** les moyens d'excitation (104, 204) sont reliés aux éléments d'entraînement (102, 202).

6. Capteur de vitesse de rotation selon la revendication 5, **caractérisé en ce que** les moyens d'excitation sont configurés comme entraînements électrostatiques en peigne (104, 204, 105, 205).

7. Capteur de vitesse de rotation selon l'une des revendications précédentes, **caractérisé en ce que** des électrodes mobiles (121) servant de moyens de détection sont reliées aux éléments de Coriolis (100, 200) et sont disposées face à des électrodes fixes (122, 123) reliées au substrat (1).

8. Capteur de vitesse de rotation selon l'une des revendications 1 à 6, **caractérisé en ce que** des premiers et des deuxièmes éléments de détection (140, 240) reliés aux éléments de Coriolis (100, 200) par des ressorts (142, 242) sont prévus pour les moyens de détection, les ressorts étant déformables suivant le premier axe et rigides suivant le deuxième axe.

9. Capteur de vitesse de rotation selon la revendication 8, **caractérisé en ce que** les éléments de détection (140, 240) présentent des électrodes mobiles (121) qui sont disposées face à des électrodes fixes (122, 123) reliées au substrat (1).

10. Capteur de vitesse de rotation selon les revendications 8 ou 9, **caractérisé en ce que** les éléments de détection (140, 240) sont reliés au substrat (1) par des ressorts (140, 141, 241) rigides dans la première direction et déformables dans la deuxième direction.
